# FASCICULE DE BREVET EUROPEEN

(11) **EP 3 860 901 B1**
(45) Date de publication et mention de la délivrance du brevet: **30.10.2024**
(21) Numéro de dépôt: 18728160.5
(22) Date de dépôt: 01.06.2018
(51) Int. Cl.: B62D 15/02

(54) **PROCÉDÉ ET SYSTÈME D'AIDE AU STATIONNEMENT D'UN VÉHICULE AUTOMOBILE**
KRAFTFAHRZEUGPARKHILFEVERFAHREN UND SYSTEM
MOTOR VEHICLE PARKING ASSISTANCE METHOD AND SYSTEM

(30) Priorité: 13.07.2017 FR 1756672
(43) Date de publication de la demande: 11.08.2021
(73) Titulaire: Ampere SAS, 92100 Boulogne-Billancourt (FR)
(72) Inventeur: SENE, Pape-Abdoulaye, 78000 Versailles (FR); KOO, Jong-Hoon, 92800 Puteaux (FR)
(74) Mandataire: Renault Group
(86) Numéro de dépôt international: PCT/EP2018/064393
(87) Numéro de publication internationale: WO 2019/011522

(56) Documents cités:
- EP-A1- 2 965 965
- EP-A1- 3 006 272
- US-A1- 2005 085 984

## Description

La présente invention concerne le domaine d'aides à la conduite d'un véhicule automobile, et notamment les aides au stationnement.

Plus particulièrement, l'invention concerne les procédés et systèmes d'aide au stationnement entièrement automatisé pour la réalisation de manoeuvres de stationnement, par exemple de type créneau.

De tels procédés et systèmes d'aide au stationnement permettent la détection d'une place de stationnement puis prennent le contrôle sur la direction assistée électrique du véhicule afin de réaliser la manoeuvre de stationnement. L'opération de braquage des roues en vue de la manoeuvre de stationnement est ainsi entièrement réalisée de manière automatique.

Le conducteur du véhicule reste responsable du changement de rapport, de l'accélération et du freinage du véhicule.

Toutefois, dans de tels procédés, l'accélération est sous l'entière responsabilité du conducteur. Il existe alors un risque que le véhicule roule à une vitesse excessive pouvant engendrer la collision avec des obstacles fixes ou mobiles se trouvant à proximité du véhicule. De plus, la détection d'obstacles, le freinage et l'immobilisation du véhicule sont également sous le contrôle exclusif du conducteur.

De plus, de tels procédés et systèmes d'aide à la conduite génèrent un manque de vigilance de la part du conducteur du véhicule, ainsi qu'une certaine anxiété pour les conducteurs qui souhaitent garder un contrôle sur le véhicule. Ces deux comportements du conducteur peuvent entraîner des problèmes de sécurité. Le document EP 3 006 272 A1 révèle par exemple les caractéristiques du préambule de la revendication 1.

On peut se référer au document FR 2 961 773 - A1 (Bosch) qui décrit un procédé semi-automatique de rangement d'un véhicule automobile dans un emplacement de stationnement dans lequel l'actionnement de la pédale d'accélération par le conducteur permet la réduction de la vitesse définie par la libération de la pédale d'accélération par le conducteur.

Toutefois, un tel procédé d'aide au stationnement ne permet pas au conducteur de choisir librement sa vitesse de manoeuvre de stationnement.

Il existe un besoin d'améliorer les procédés et systèmes d'aide à la conduite afin de proposer au conducteur une aide au stationnement la plus sécurisée possible, tout en proposant un contrôle par le conducteur du véhicule.

L'objet de la présente invention est donc de fournir un système et un procédé d'aide au stationnement capables de prendre en compte la dispersion des actionneurs, notamment des systèmes de freinage, tout en assurant le maintien du véhicule sur une route en pente sans influer sur la précision de la régulation.

L'invention a pour objet un système d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, un moyen d'activation d'une fonction de pilotage automatique et une pédale d'accélération.

Le système d'aide au stationnement comprend un module de régulation de vitesse calculant à tout moment de la manoeuvre une consigne de vitesse en fonction d'une valeur de vitesse maximale, d'une distance restante à parcourir calculée par un système de perception et de planification de la trajectoire et du pourcentage d'enfoncement de la pédale d'accélération par le conducteur.

Ainsi, le conducteur peut contrôler la vitesse de la manoeuvre de stationnement de manière souple et progressive.

Avantageusement, le système comprend un module de détection de l'activation d'une phase de recherche d'une place de stationnement apte à vérifier que le conducteur a appuyé sur un organe de commande afin d'activer la fonction de recherche de place de stationnement. Lorsque le conducteur active la fonction de recherche de place de stationnement, le module de détection détecte une ou plusieurs places de stationnement à proximité du véhicule et les affiche, par exemple sur une interface homme-machine.

Le système comprend un module de vérification des conditions pour démarrer la manoeuvre de stationnement. Une fois la place de stationnement validée par le conducteur, et lorsque les conditions nécessaires pour engager la manoeuvre sont réunies, c'est-à-dire, qu'une place de stationnement est trouvée, que le véhicule est dans la bonne position pour effectuer la manoeuvre de stationnement, que le véhicule est à l'arrêt et que les feux clignotants sont actionnés, le système d'aide au stationnement est prêt pour engager la manoeuvre de stationnement. Le conducteur doit alors confirmer la manoeuvre par, par exemple, un appui sur le même organe de commande que la détection de place, ou un autre organe de commande.

Ainsi, il n'y a plus besoin d'une commande spécifique tel qu'un bouton dédié maintenu tout le long de la manoeuvre. En effet, la pédale d'accélération joue le rôle d'actionneur de la manoeuvre de stationnement. Le conducteur a la possibilité de moduler directement la vitesse en fonction du pourcentage d'enfoncement de la pédale d'accélération ; ainsi, le conducteur reste maitre de la vitesse à laquelle doit se déplacer le véhicule lors de la manoeuvre de stationnement. On obtient ainsi une progressivité de la pédale d'accélération qui est active et non passive par rapport à l'état de la technique. Plus on appuie sur la pédale d'accélération, plus la consigne de vitesse générée par le module de régulation de vitesse est élevée jusqu'à atteindre les limites admissibles par le système d'aide au stationnement.

Avantageusement, le système comprend un module de découplage entre le moteur et la pédale d'accélération, de sorte qu'une fois la manoeuvre de stationnement validée par l'appui pédale et lorsque les conditions nécessaires pour engager la manoeuvre sont réunies, et pendant toute la durée de la manoeuvre de stationnement, le moteur ne prend plus en compte les consignes d'accélération transmises par la pédale d'accélération, mais uniquement les consignes d'accélération envoyées par le module de régulation de vitesse.

Par exemple, le système comprend un module de vérification de l'enfoncement de la pédale d'accélération et module de réalisation de la manoeuvre de stationnement qui met le véhicule en mouvement lorsque la pédale d'accélération est enfoncée et régule la vitesse par le module de régulation de vitesse. Ainsi, la manoeuvre de stationnement ne démarre que si le conducteur appuie sur la pédale d'accélération et maintient cet appui. La pédale d'accélération a le rôle d'un moyen de commande « homme-mort ».

Le module de réalisation de la manoeuvre de stationnement vérifie en permanence que la pédale d'accélération est maintenue appuyée par le conducteur. Dans le cas contraire, le système se met en pause. Le module de réalisation de la manoeuvre de stationnement vérifie également que la pédale de frein n'est pas actionnée, sinon le système se met également en pause. Lorsque le système est mis en pause, il régule la vitesse du mouvement en cours jusqu'à l'immobilisation progressive du véhicule.

La manoeuvre de stationnement peut être reprise à tout moment, même avant que le véhicule ne soit complètement immobilisé, lorsque le conducteur appuie de nouveau sur la pédale d'accélération et si la pédale de frein n'est pas actionnée. Ainsi, le conducteur peut contrôler la manoeuvre de stationnement par l'utilisation de la pédale d'accélération. Ceci permet de s'assurer que le conducteur garde son pied à proximité de la pédale de frein afin de pouvoir réagir rapidement lors de la présence d'un obstacle mobile ou fixe.

Le module de régulation de vitesse peut comprendre un module de détermination d'un profil de vitesse maximale admissible pendant la manoeuvre de stationnement en fonction de la distance restante à parcourir issu d'un profil de distance et d'une valeur de seuil de vitesse maximale issue d'un profil fournis par un système de perception et de planification de la trajectoire, un module de calcul d'un ratio de vitesse en fonction du pourcentage d'enfoncement de la pédale d'accélération issu d'un profil, et de génération d'un ensemble de profils de consignes de vitesse, un module de détermination d'un profil de consigne de vitesse brute modulée en fonction de l'enfoncement de la pédale d'accélération et du profil de vitesse maximale déterminé et un module de détermination d'un profil de consigne de vitesse filtrée en fonction de la consigne de vitesse brute modulée calculée précédemment.

Cette consigne de vitesse filtrée correspond à la consigne finale de vitesse de manoeuvre de stationnement qui est ensuite envoyée à un régulateur de vitesse qui transmet les demandes d'accélération au moteur et de décélération au système de freinage afin de respecter le plus précisément possible la consigne de vitesse finale calculée.

Selon un second aspect, l'invention concerne un procédé d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, une interface visuelle et sonore, un moyen d'activation d'une fonction pilotage automatique et une pédale d'accélération.

Selon le procédé, on régule la vitesse de manoeuvre à tout moment de la manoeuvre en fonction d'une valeur de vitesse maximale, d'une distance restante à parcourir calculée par un système de perception et de planification de la trajectoire et du pourcentage d'enfoncement de la pédale d'accélération par le conducteur.

Avantageusement, on détecte l'activation d'une phase de recherche d'une place de stationnement apte à vérifier que le conducteur a appuyé sur un organe de commande afin d'activer la fonction de recherche de place de stationnement. Lorsque le conducteur active la fonction de recherche de place de stationnement, le procédé détecte une ou plusieurs places de stationnement à proximité du véhicule et les affiche, par exemple sur une interface homme-machine.

Selon l'invention, on vérifie que les conditions nécessaires pour démarrer la manoeuvre de stationnement sont réunies et que le conducteur confirme la manoeuvre, les conditions nécessaires comprenant au moins une place de stationnement est trouvée, le véhicule est dans la bonne position pour effectuer la manoeuvre de stationnement, le véhicule est à l'arrêt et les feux clignotants sont actionnés. Une fois les conditions réunies le procédé d'aide au stationnement est prêt pour engager la manoeuvre de stationnement. Le conducteur doit alors confirmer la manoeuvre par, par exemple, un appui sur le même organe de commande que la détection de place, ou un autre organe de commande.

Une fois le procédé prêt pour la manoeuvre, on découple le moteur et la pédale d'accélération, de sorte qu'une fois la manoeuvre de stationnement validée par un appui sur la pédale d'accélération et pendant toute la durée de la manoeuvre de stationnement, le moteur ne prend plus en compte les consignes d'accélération transmises par la pédale d'accélération, mais uniquement les consignes d'accélération envoyées par un module de régulation de vitesse.

Après découplage entre le moteur et la pédale d'accélération, on vérifie l'enfoncement de la pédale d'accélération et on actionne un module de réalisation de la manoeuvre de stationnement qui met le véhicule en mouvement lorsque la pédale d'accélération est enfoncée et régule la vitesse par un module de régulation de vitesse. Ainsi, la manoeuvre de stationnement ne démarre que si le conducteur appuie sur la pédale d'accélération et maintient cet appui. La pédale d'accélération a le rôle d'un moyen de commande « homme-mort ».

Le procédé vérifie en permanence que la pédale d'accélération est maintenue appuyée par le conducteur. Dans le cas contraire, le procédé se met en pause. Le procédé de la manoeuvre de stationnement vérifie également que la pédale de frein n'est pas actionnée, sinon le système se met également en pause. Lorsque le procédé est mis en pause, il régule la vitesse du mouvement en cours jusqu'à l'immobilisation progressive du véhicule.

La manoeuvre de stationnement peut être reprise à tout moment, même avant que le véhicule ne soit complètement immobilisé, lorsque le conducteur appuie de nouveau sur la pédale d'accélération et si la pédale de frein n'est pas actionnée. Ainsi, le conducteur peut contrôler la manoeuvre de stationnement par l'utilisation de la pédale d'accélération. Ceci permet de s'assurer que le conducteur garde son pied à proximité de la pédale de frein afin de pouvoir réagir rapidement lors de la présence d'un obstacle mobile ou fixe.

Avantageusement, pour réguler la vitesse, on détermine un profil de vitesse maximale admissible pendant la manoeuvre de stationnement en fonction de la distance restante à parcourir issu d'un profil de distance et d'une valeur de seuil de vitesse maximale issue d'un profil fournis par un système de perception et de planification de la trajectoire, on calcule un ratio de vitesse en fonction du pourcentage d'enfoncement de la pédale d'accélération issu d'un profil, et on génère un ensemble de profils de consignes de vitesse, on détermine un profil de consigne de vitesse brute modulée en fonction de l'enfoncement de la pédale d'accélération et du profil de vitesse maximale déterminé et on détermine un profil de consigne de vitesse filtrée en fonction de la consigne de vitesse brute modulée calculée précédemment.

Le système et le procédé selon l'invention permettent la modulation de vitesse de la manoeuvre en fonction du niveau d'appui sur la pédale d'accélération et peuvent gérer les cas de manoeuvre en pente, en montée comme en descente.

Le système et le procédé décrit utilisent des systèmes de perception tels que capteurs, ultrasons, mais aussi caméras, radars, lidars de sorte à obtenir une meilleure perception de l'environnement au moyen d'une fusion des informations de tous ces systèmes.

Le système et le procédé décrit permettent également la reprise à la volée si le conducteur ré-appuie sur la pédale après l'avoir relâchée, ce qui permet de reprendre la régulation de vitesse en partant de la vitesse courante du véhicule vers une vitesse correspondant à la demande du conducteur.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement un système d'aide au stationnement d'un véhicule automobile selon l'invention ;

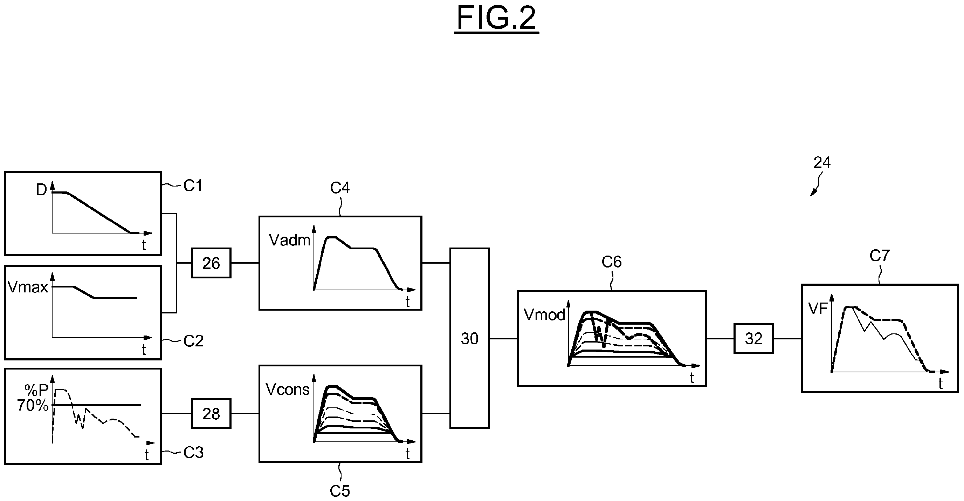

- la figure 2 illustre en détails le module de régulation de vitesse du système d'aide au stationnement de la figure 1 ; et
- la figure 3 illustre les étapes d'un procédé d'aide au stationnement selon l'invention mis en oeuvre par le système d'aide au stationnement de la figure 1.

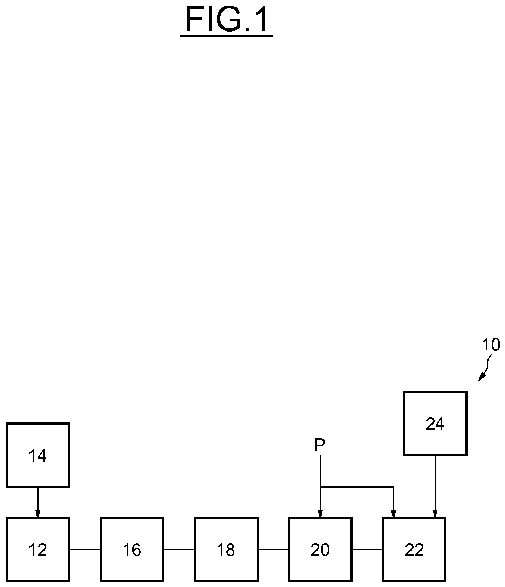

Sur la figure 1, on a représenté de manière très schématique un système 10 d'aide à la conduite et notamment au stationnement d'un véhicule automobile (non représenté). Le véhicule automobile comprend les éléments suivants qui ne sont pas représentés sur les figures pour plus de clarté : un système de détection d'obstacles situés à proximité du véhicule, par exemple à une distance inférieure à 2m, un système de détection de places de stationnement, une direction assistée électrique pilotable en angle de braquage, un moteur et un système de freinage tous les deux pilotables en couple répondant à des demandes d'accélération et de freinage, une boite de vitesse automatique ou un système dit «shift by wire », au moins un capteur odométrique, un accéléromètre, une interface visuelle et sonore, un moyen d'activation d'une fonction pilotage automatique ou « homme-mort », et une pédale d'accélération, ainsi qu'un capteur d'enfoncement de ladite pédale d'accélération.

Le système 10 d'aide au stationnement permet le stationnement du véhicule depuis une voie de circulation vers un emplacement libre de stationnement, ainsi que la sortie de ladite place de stationnement vers la voie de circulation. Le système 10 d'aide au stationnement permet de commander le moteur, les freins, la direction, ainsi que la boite de vitesse automatique.

Le système 10 d'aide au stationnement utilise la pédale d'accélération comme unique moyen de commande de la manoeuvre de stationnement du véhicule automobile. Ainsi, un découplage entre la pédale d'accélération et le moteur du véhicule est réalisé pendant toute la manoeuvre automatisée de stationnement.

Le système 10 d'aide au stationnement comprend un module 12 de détection de l'activation d'une phase de recherche d'une place de stationnement. Le module 12 de détection vérifie que le conducteur a appuyé sur un organe de commande 14, par exemple un bouton présent sur le tableau de bord du véhicule afin d'activer la fonction de recherche de place de stationnement. Lorsque le conducteur active la fonction de recherche de place de stationnement, le module 12 de détection détecte une ou plusieurs places de stationnement à proximité du véhicule et les affiche, par exemple sur une interface homme-machine (non représentée).

On pourrait également prévoir que le module 12 de détection recherche les places de stationnement sans les proposer au conducteur avant que le conducteur n'appuie sur le bouton de commande 14 afin de pouvoir proposer au conducteur les places détectées dès qu'il appuie sur l'organe de commande 14.

Le système 10 d'aide au stationnement comprend un module 16 de vérification des conditions pour démarrer la manoeuvre de stationnement. Une fois la place de stationnement validée par le conducteur, et lorsque les conditions nécessaires pour engager la manoeuvre sont réunies, c'est-à-dire, qu'une place de stationnement est trouvée, que le véhicule est dans la bonne position pour effectuer la manoeuvre de stationnement, que le véhicule est à l'arrêt et que les feux clignotants sont actionnés, le système d'aide au stationnement est prêt pour engager la manoeuvre de stationnement. Le conducteur doit alors confirmer la manoeuvre par, par exemple, un appui sur le même organe de commande 14 que la détection de place, ou un autre organe de commande.

Le système 10 comprend en outre un module 18 de découplage entre le moteur et la pédale d'accélération, de sorte qu'une fois la manoeuvre de stationnement validée, et pendant toute la durée de la manoeuvre de stationnement, le moteur ne prend plus en compte les consignes d'accélération transmises par la pédale d'accélération, mais uniquement les consignes d'accélération envoyées par un module 24 de régulation de vitesse du système 10 d'aide au stationnement.

Pour débuter la manoeuvre de stationnement, le système 10 comprend un module 20 de vérification de l'enfoncement de la pédale P d'accélération. Ainsi, la manoeuvre de stationnement ne démarre que si le conducteur appuie sur la pédale P d'accélération et maintient cet appui. La pédale d'accélération P a le rôle d'un moyen de commande « homme-mort ».

Le système 10 comprend un module 22 de réalisation de la manoeuvre de stationnement qui met le véhicule en mouvement et régule la vitesse par un module 24 de régulation de vitesse. Le module 22 de réalisation de la manoeuvre de stationnement vérifie en permanence que la pédale P d'accélération est maintenue appuyée par le conducteur. Dans le cas contraire, le système 10 se met en pause. Le module 22 de réalisation de la manoeuvre de stationnement vérifie également que la pédale de frein n'est pas actionnée, sinon le système se met également en pause. Lorsque le système est mis en pause, il régule la vitesse du mouvement en cours jusqu'à l'immobilisation progressive du véhicule.

La manoeuvre de stationnement peut être reprise à tout moment, même avant que le véhicule ne soit complètement immobilisé, lorsque le conducteur appuie de nouveau sur la pédale d'accélération et si la pédale de frein n'est pas actionnée. Ainsi, le conducteur peut contrôler la manoeuvre de stationnement par l'utilisation de la pédale d'accélération. Ceci permet de s'assurer que le conducteur garde son pied à proximité de la pédale de frein afin de pouvoir réagir rapidement lors de la présence d'un obstacle mobile ou fixe.

Le module 24 de régulation de vitesse calcule à tout moment de la manoeuvre une consigne de vitesse transmise au moteur en fonction d'une valeur de vitesse maximale Vmax, de la distance D restante à parcourir calculée par un système de perception et de planification de la trajectoire (non représenté), et du pourcentage d'enfoncement %P de la pédale P d'accélération par le conducteur.

Le système de perception et de planification de la trajectoire utilise des organes de perception et de mesure de la place de stationnement basés sur des capteurs de types caméras et/ou ultrasons et/ou radars (non représentés). Ainsi, le module 24 de régulation de vitesse reçoit en temps réel les informations de distance D restante à parcourir et de vitesse maximale Vmax.

Le module 24 de régulation de vitesse comprend un module 26 de détermination d'un profil C4 de vitesse maximale admissible Vadm pendant la manoeuvre de stationnement en fonction de la distance D restante à parcourir issu d'un profil C1 de distance et d'une valeur de seuil de vitesse maximale Vmax issue d'un profil C2 fournis par le système de perception et de planification de la trajectoire. Ce profil C4 de vitesse maximale prend également en compte les réductions de vitesse lors des phases de braquage des roues, la détection d'obstacles et les petits mouvements pour rentrer dans la place de stationnement.

Le module 24 de régulation de vitesse comprend un module 28 de calcul d'un ratio de vitesse en fonction du pourcentage d'enfoncement %P de la pédale d'accélération issu d'un profil C3, et génère un ensemble de profils de consignes de vitesse Vcons représentés sur la cartographie C5.

Le module 24 de régulation de vitesse comprend un module 30 de détermination d'un profil C6 de consigne de vitesse brute modulée Vmod en fonction de l'enfoncement %P de la pédale d'accélération et du profil C4 de vitesse maximale déterminé.

Le module 24 de régulation de vitesse comprend un module 32 de détermination d'un profil C7 de consigne de vitesse filtrée VF en fonction de la consigne de vitesse brute modulée Vmod calculée précédemment.

Cette consigne de vitesse filtrée VF correspond à la consigne finale de vitesse de manoeuvre de stationnement qui est ensuite envoyée à un régulateur de vitesse (non représenté) qui transmet les demandes d'accélération au moteur et de décélération au système de freinage afin de respecter le plus précisément possible la consigne de vitesse finale calculée.

Dans la mesure où le système 10 d'aide au stationnement intègre un régulateur de vitesse grâce au module 24 de régulation de vitesse à tout instant de la manoeuvre, un appui sur la pédale d'accélération est toujours interprétée en consigne de vitesse positive dans le sens de la marche considérée. Ainsi, le véhicule est toujours en mouvement dans la bonne direction, même lorsque le conducteur appuie très légèrement sur la pédale d'accélération lorsque le véhicule se trouve sur une pente montante. En effet, si le système se limitait à un limiteur de vitesse comme il existe dans l'art antérieur, une faible demande du conducteur lorsque le véhicule se trouve en pente pourrait amener le véhicule à être en mouvement dans le mauvais sens.

Pendant la manoeuvre de stationnement, lorsque le conducteur relâche la pédale d'accélération, le système se met en pause et entre dans un fonctionnement de limiteur de vitesse avec freinage et non plus de régulation de vitesse. Le profil de limitation de vitesse est alors calculé en fonction de la vitesse courante pour décroître avec une décélération constante jusqu'à l'immobilisation du véhicule. Le système s'assure que la vitesse du véhicule ne dépasse pas ce profil de limitation par freinage automatique et permet une décélération plus importante dans le cas où la décélération naturelle du véhicule, par exemple sur une pente montante ou lorsque le conducteur freine, dépasse le profil de limitation.

Pendant cette phase de limitation de vitesse avec freinage, si le conducteur appuie sur la pédale d'accélération alors que le véhicule est en cours de décélération mais non arrêté, le module de régulation 24 se réactive en initialisant sa consigne de vitesse à la vitesse courante. Ainsi, le système 10 reprend en considération le pourcentage d'enfoncement de la pédale d'accélération pour moduler la vitesse de manoeuvre comme décrit précédemment.

Lorsque le véhicule est à l'arrêt, le système 10 maintient le véhicule à l'arrêt tant que le conducteur n'appuie pas sur la pédale d'accélération pour reprendre le mouvement.

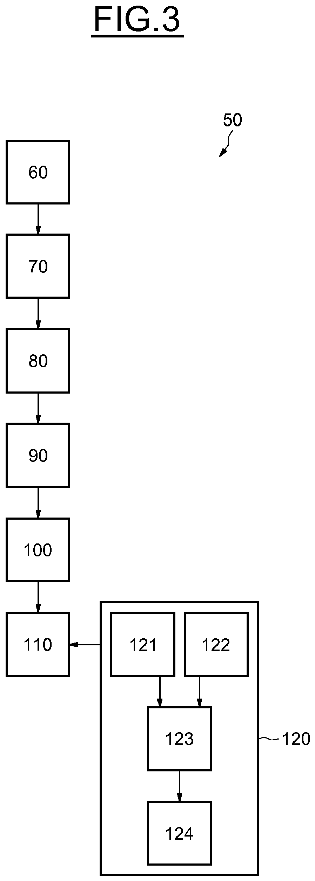

La figure 3 représente un organigramme de mise en oeuvre d'un procédé 50 d'aide au stationnement d'un véhicule automobile.

Le procédé 50 permet le stationnement du véhicule depuis une voie de circulation vers un emplacement libre de stationnement, ainsi que la sortie de ladite place de stationnement vers la voie de circulation.

Le procédé 50 comprend une étape 60 de détection de l'activation d'une phase de recherche d'une place de stationnement. Lors de cette étape 60, le procédé vérifie que le conducteur a appuyé sur un organe de commande 14, par exemple un bouton présent sur le tableau de bord du véhicule afin d'activer la fonction de recherche de place de stationnement. Lorsque le conducteur active la fonction de recherche de place de stationnement, le procédé détecte une ou plusieurs places de stationnement à proximité du véhicule et les affiche, par exemple sur une interface homme-machine (non représentée).

On pourrait également prévoir que le procédé comprenne une étape préalable de recherche de place de stationnement sans les proposer au conducteur afin de pouvoir proposer au conducteur les places détectées dès qu'il appuie sur l'organe de commande.

Une fois la place de stationnement validée par le conducteur, le procédé comprend une étape 70 d'attente du début de la manoeuvre.

Lors de cette étape 70 d'attente, le procédé vérifie que les conditions nécessaires pour engager la manoeuvre sont réunies, c'est-à-dire, qu'une place de stationnement est trouvée, que le véhicule est dans la bonne position pour effectuer la manoeuvre de stationnement, que le véhicule est à l'arrêt et que les feux clignotants sont actionnés.

Une fois les conditions réunies pour effectuer la manoeuvre, le procédé vérifie, à l'étape 80, la confirmation de la manoeuvre par le conducteur, par exemple, sur le même organe de commande que la détection de place, ou un autre organe de commande.

Le procédé passe alors à une étape 90 de découplage entre le moteur et la pédale P d'accélération, de sorte qu'à partir de cette étape, et pendant la durée de la manoeuvre de stationnement, le moteur ne prend plus en compte les consignes d'accélération transmises par la pédale d'accélération, mais uniquement les consignes d'accélération envoyées par le module de génération de consigne du système 10 d'aide au stationnement.

Pour débuter la manoeuvre de stationnement, le procédé comprend une étape 100 de vérification de l'enfoncement de la pédale d'accélération. Ainsi, la manoeuvre de stationnement ne démarre que si le conducteur appuie sur la pédale d'accélération et maintient cet appui. La pédale d'accélération a le rôle d'un moyen de commande « homme-mort ».

A l'étape 110, la manoeuvre de stationnement démarre, le véhicule se met en mouvement et la vitesse est régulée par le module de génération de consigne.

Lors de cette étape, le procédé vérifie en permanence que la pédale P d'accélération est maintenue appuyée par le conducteur. Dans le cas contraire, le procédé se met en pause. Lors de cette étape, le procédé vérifie également que la pédale de frein n'est pas actionnée, sinon le procédé se met également en pause. Lorsque le procédé est mis en pause, il régule la vitesse du mouvement en cours jusqu'à l'immobilisation progressive du véhicule.

La manoeuvre de stationnement peut être reprise à tout moment, même avant que le véhicule ne soit complètement immobilisé, lorsque le conducteur appuie de nouveau sur la pédale d'accélération et si la pédale de frein n'est pas actionnée. Ainsi, le conducteur peut contrôler la manoeuvre de stationnement par l'utilisation de la pédale d'accélération. Ceci permet de s'assurer que le conducteur garde son pied à proximité de la pédale de frein afin de pouvoir réagir rapidement lors de la présence d'un obstacle mobile ou fixe.

Pendant toute l'étape 110 de manoeuvre de stationnement, le procédé comprend une étape 120 de régulation de vitesse transmise au moteur en fonction d'une valeur de vitesse maximale Vmax, de la distance D restante à parcourir calculée par un système de perception et de planification de la trajectoire (non représenté), et du pourcentage %P d'enfoncement de la pédale P d'accélération par le conducteur.

Le système de perception et de planification de la trajectoire utilise des organes de perception et de mesure de la place de stationnement basés sur des capteurs de types caméras et/ou ultrasons et/ou radars (non représentés). Ainsi, le module de régulation de vitesse reçoit en temps réel les informations de distance restante à parcourir et de vitesse maximale.

L'étape 120 de régulation de vitesse comprend une première étape 121 de détermination d'un profil de vitesse maximale admissible Vadm pendant la manoeuvre de stationnement en fonction de la distance D restante à parcourir et d'une valeur de seuil de vitesse maximale Vmax fournie par le système de perception et de planification de la trajectoire. Ce profil de vitesse maximale prend également en compte les réductions de vitesse lors des phases de braquage des roues, la détection d'obstacles et les petits mouvements pour rentrer dans la place de stationnement. L'étape 120 de régulation de vitesse comprend en outre une deuxième étape 122 de calcul d'un ratio de vitesse Vcons en fonction du pourcentage d'enfoncement de la pédale d'accélération, une troisième étape de calcul d'une consigne de vitesse brute modulée Vmod en fonction de l'enfoncement de la pédale d'accélération et du profil de vitesse maximale déterminé et une quatrième étape de calcul d'une consigne de vitesse filtrée VF en fonction de la consigne de vitesse brute calculée précédemment.

Cette consigne de vitesse filtrée correspond à la consigne finale de vitesse de manoeuvre de stationnement qui est ensuite envoyée à un régulateur de vitesse qui transmet les demandes d'accélération au moteur et de décélération au système de freinage afin de respecter le plus précisément possible la consigne de vitesse finale calculée.

Grâce au système et au procédé d'aide au stationnement, le stationnement du véhicule est facilité pour le conducteur tout en permettant d'obliger le conducteur à rester vigilant pendant toute la manoeuvre de stationnement.

De plus, il n'y a plus besoin d'une commande spécifique telle qu'un bouton dédié maintenu tout le long de la manoeuvre. En effet, la pédale d'accélération joue le rôle d'actionneur de la manoeuvre de stationnement, et permet également au conducteur de contrôler la vitesse de la manoeuvre de stationnement de manière souple et progressive.

En outre, le procédé d'aide au stationnement d'un véhicule automobile inclut préférentiellement une étape de filtrage des relâchements et appuis brusques de la pédale P d'accélération. Cette étape permet, sans présence d'obstacle autour du véhicule, dans le cas d'un relâchement brusque de la pédale P de calculer une consigne de vitesse finale pour le régulateur de vitesse réduisant de façon fluide la vitesse du véhicule. De la même façon tout appui brusque n'entraine ainsi pas une accélération importante du véhicule pour attendre la consigne souhaitée par le conducteur. Le conducteur est ainsi assuré d'un très bon niveau de confort tout en filtrant les dynamiques fortes sur la pédale P. Le système d'aide au stationnement d'un véhicule automobile comporte donc préférentiellement des moyens additionnels de filtrage des relâchements et appuis brusques de la pédale P d'accélération. Il s'agit d'un filtre qui limite le taux de variation du signal de sortie par rapport à un signal d'entrée. Ce filtre limite d'une part, à une dynamique maximale toutes les variations correspondant à des taux de croissance de valeur supérieure à un seuil UpperLimit maximal de taux de croissance modifiable et prédéterminé. Le seuil UpperLimit maximal de taux de croissance est choisi parmi l'intervalle [20%/s ; 100%/s] et vaut préférentiellement 65%/s. D'autre part, toutes les variations correspondant à des taux de décroissance de valeur supérieure en valeur absolue à un autre seuil LowerLimit maximal de taux de décroissance différent et également modifiable et prédéterminé. Le seuil LowerLimit maximal de taux de décroissance est choisi parmi l'intervalle [-70%/s ;-20%/s] et vaut préférentiellement -25%/s. L'entrée du filtre est la donnée brute de l'enfoncement de la pédale d'accélération P et la sortie du filtre est une donnée d'enfoncement filtrée correspondant à une information virtuelle d'enfoncement de la pédale qui respecte les cibles de confort imposées. La sortie Pout du filtre est définie par l'équation suivante à l'instant k de calcul, s'incrémentant pendant la durée de manoeuvre, et pour la période Te d'échantillonnage, valant par exemple 10 ou 20ms:
P_out(k) = P_out(k-1) + max(LowerLimit*Te; min((P(k)-P_out(k-1));UpperLimit*Te))
Par la suite c'est cette donnée d'enfoncement filtrée P_out qui est alors utilisée pour en dériver un ratio entre 0 et 1 lequel est multiplié par la suite à la vitesse maximale admissible Vadm afin d'obtenir la consigne de vitesse filtrée VF.

## Revendications

1. Système d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, un moyen d'activation d'une fonction de pilotage automatique et une pédale d'accélération (P), **caractérisé en ce que** le système d'aide au stationnement comprend un module (24) de régulation de vitesse calculant à tout moment de la manoeuvre une consigne de vitesse en fonction d'une valeur de vitesse maximale (Vmax), d'une distance (D) restante à parcourir calculée par un système de perception et de planification de la trajectoire et du pourcentage d'enfoncement (%P) de la pédale (P) d'accélération par le conducteur, et **en ce que** le système d'aide au stationnement comprend un module (16) de vérification des conditions nécessaires pour démarrer la manoeuvre de stationnement et de la confirmation de la manoeuvre par le conducteur, les conditions nécessaires comprenant : au moins une place de stationnement est trouvée, le véhicule est dans la bonne position pour effectuer la manoeuvre de stationnement, le véhicule est à l'arrêt et les feux clignotants sont actionnés.

2. Système selon la revendication 1, comprenant un module (12) de détection de l'activation d'une phase de recherche d'une place de stationnement apte à vérifier que le conducteur a appuyé sur un organe de commande (14) afin d'activer la fonction de recherche de place de stationnement.

3. Système selon la revendication 2, comprenant un module (18) de découplage entre le moteur et la pédale d'accélération, de sorte qu'une fois la manoeuvre de stationnement validée et lorsque les conditions pour démarrer la manoeuvre de stationnement sont réunies, et pendant toute la durée de la manoeuvre de stationnement, le moteur ne prend plus en compte les consignes d'accélération transmises par la pédale d'accélération, mais uniquement les consignes d'accélération envoyées par le module (24) de régulation de vitesse.

4. Système selon la revendication 3, comprenant un module (20) de vérification de l'enfoncement de la pédale (P) d'accélération et module (22) de réalisation de la manoeuvre de stationnement qui met le véhicule en mouvement lorsque la pédale (P) d'accélération est enfoncée et régule la vitesse par le module (24) de régulation de vitesse.

5. Système selon la revendication 4, dans lequel le module (24) de régulation de vitesse comprend un module (26) de détermination d'un profil (C4) de vitesse maximale admissible (Vadm) pendant la manoeuvre de stationnement en fonction de la distance (D) restante à parcourir issu d'un profil (C1) de distance et d'une valeur de seuil de vitesse maximale (Vmax) issue d'un profil (C2) fournis par un système de perception et de planification de la trajectoire, un module (28) de calcul d'un ratio de vitesse en fonction du pourcentage d'enfoncement (%P) de la pédale d'accélération issu d'un profil (C3), et de génération d'un ensemble de profils (C5) de consignes de vitesse (Vcons), un module (30) de détermination d'un profil (C6) de consigne de vitesse brute modulée (Vmod) en fonction de l'enfoncement (%P) de la pédale d'accélération et du profil (C4) de vitesse maximale déterminé et un module (32) de détermination d'un profil (C7) de consigne de vitesse filtrée (VF) en fonction de la consigne de vitesse brute modulée (Vmod) calculée précédemment.

6. Procédé d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, une interface visuelle et sonore, un moyen d'activation d'une fonction pilotage automatique et une pédale (P) d'accélération, procédé dans lequel on régule la vitesse de manoeuvre à tout moment de la manoeuvre en fonction d'une valeur de vitesse maximale (Vmax), d'une distance (D) restante à parcourir calculée par un système de perception et de planification de la trajectoire et du pourcentage d'enfoncement (%P) de la pédale (P) d'accélération par le conducteur, et dans lequel on vérifie que les conditions nécessaires pour démarrer la manoeuvre de stationnement sont réunies et que le conducteur confirme la manoeuvre, les conditions nécessaires comprenant au moins une place de stationnement est trouvée, le véhicule est dans la bonne position pour effectuer la manoeuvre de stationnement, le véhicule est à l'arrêt et les feux clignotants sont actionnés.

7. Procédé selon la revendication 6, dans lequel on détecte l'activation d'une phase de recherche d'une place de stationnement apte à vérifier que le conducteur a appuyé sur un organe de commande (14) afin d'activer la fonction de recherche de place de stationnement.

8. Procédé selon la revendication 6 ou 7, dans lequel une fois le procédé prêt pour la manoeuvre, on découple le moteur et la pédale d'accélération, de sorte qu'une fois la manoeuvre de stationnement validée, et pendant toute la durée de la manoeuvre de stationnement, le moteur ne prend plus en compte les consignes d'accélération transmises par la pédale d'accélération, mais uniquement les consignes d'accélération envoyées par un module de régulation de vitesse.

9. Procédé selon la revendication 8, dans lequel après découplage entre le moteur et la pédale d'accélération, on vérifie l'enfoncement de la pédale (P) d'accélération et on actionne un module (22) de réalisation de la manoeuvre de stationnement qui met le véhicule en mouvement lorsque la pédale (P) d'accélération est enfoncée et régule la vitesse par un module (24) de régulation de vitesse.

10. Procédé selon la revendication 9, dans lequel pour réguler la vitesse, on détermine un profil (C4) de vitesse maximale admissible (Vadm) pendant la manoeuvre de stationnement en fonction de la distance (D) restante à parcourir issue d'un profil (C1) de distance et d'une valeur de seuil de vitesse maximale (Vmax) issue d'un profil (C2) fournis par un système de perception et de planification de la trajectoire, on calcule un ratio de vitesse en fonction du pourcentage d'enfoncement (%P) de la pédale d'accélération issu d'un profil (C3), et on génère un ensemble de profils (C5) de consignes de vitesse (Vcons), on détermine un profil (C6) de consigne de vitesse brute modulée (Vmod) en fonction de l'enfoncement (%P) de la pédale d'accélération et du profil (C4) de vitesse maximale déterminé et on détermine un profil (C7) de consigne de vitesse filtrée (VF) en fonction de la consigne de vitesse brute modulée (Vmod) calculée précédemment.

## Patentansprüche

1. Parkhilfesystem für ein Kraftfahrzeug, welches das Parken des Fahrzeugs von einer Fahrbahn aus in eine freie Parklücke und das Herausfahren aus dem Parkplatz zurück auf die Fahrbahn gestattet, wobei das Kraftfahrzeug ein Hindernisdetektionssystem, ein Parkplatzdetektionssystem, eine elektrische Servolenkung mit ansteuerbarem Lenkwinkel, einen Motor und ein Bremssystem, die zusammen angesteuert werden können, ein Automatikgetriebe oder ein sogenanntes "Shift-by-Wire"-System, mindestens einen Wegaufnehmer, einen Beschleunigungsmesser, ein Mittel zur Aktivierung einer automatischen Ansteuerungsfunktion und ein Gaspedal (P) beinhaltet, **dadurch gekennzeichnet, dass** das Parkhilfesystem ein Geschwindigkeitsregelmodul (24) beinhaltet, das zu jedem Zeitpunkt des Manövers einen Geschwindigkeitssollwert in Abhängigkeit von einem Wert einer Maximalgeschwindigkeit (Vmax), einer verbleibenden zurückzulegenden Entfernung (D), die durch ein System zur Wahrnehmung und Planung der Trajektorie berechnet wird, und dem Prozentsatz des Niederdrückens (%P) des Gaspedals (P) durch den Fahrer berechnet, und dass das Parkhilfesystem ein Modul (16) zur Verifizierung der Bedingungen, die für das Starten des Parkmanövers erforderlich sind, und der Bestätigung des Manövers durch den Fahrer beinhaltet, wobei die erforderlichen Bedingungen Folgendes beinhalten:
es wurde mindestens ein Parkplatz gefunden, das Fahrzeug befindet sich in der richtigen Position, um das Parkmanöver durchzuführen, das Fahrzeug steht still und die Blinkleuchten sind betätigt.

2. System nach Anspruch 1, das ein Modul (12) zur Detektion der Aktivierung einer Phase des Suchens nach einem Parkplatz beinhaltet, das dazu fähig ist zu verifizieren, dass der Fahrer ein Steuerorgan (14) gedrückt hat, um die Parkplatzsuchfunktion zu aktivieren.

3. System nach Anspruch 2, das ein Modul (18) zur Entkopplung des Motors von dem Gaspedal beinhaltet, sodass, sobald das Parkmanöver validiert wurde und wenn die Bedingungen für das Starten des Parkmanövers erfüllt sind und für die gesamte Dauer des Parkmanövers, der Motor nicht mehr die durch das Gaspedal übermittelten Beschleunigungssollwerte, sondern nur noch die durch das Geschwindigkeitsregelmodul (24) gesendeten Beschleunigungssollwerte berücksichtigt.

4. System nach Anspruch 3, das ein Modul (20) zur Verifizierung des Niederdrückens des Gaspedals (P) und ein Modul (22) zur Ausführung des Parkmanövers beinhaltet, welches das Fahrzeug in Bewegung setzt, wenn das Gaspedal (P) niedergedrückt wird, und die Geschwindigkeit durch das Geschwindigkeitsregelmodul (24) regelt.

5. System nach Anspruch 4, wobei das Geschwindigkeitsregelmodul (24) Folgendes beinhaltet: ein Modul (26) zur Bestimmung eines Profils (C4) einer zulässigen Maximalgeschwindigkeit (Vzul) während des Parkmanövers in Abhängigkeit von der verbleibenden zurückzulegenden Entfernung (D), die sich aus einem Entfernungsprofil (C1) ergibt, und einem Schwellenwert einer Maximalgeschwindigkeit (Vmax), der sich aus einem Profil (C2), das von einem System zur Wahrnehmung und Planung der Trajektorie bereitgestellt wird, ergibt, ein Modul (28) zur Berechnung eines Geschwindigkeitskoeffizienten in Abhängigkeit von dem Prozentsatz des Niederdrückens (%P) des Gaspedals, der sich aus einem Profil (C3) ergibt, und zur Erzeugung eines Satzes von Profilen (C5) von Geschwindigkeitssollwerten (Vsoll), ein Modul (30) zur Bestimmung eines Profils (C6) eines modulierten rohen Geschwindigkeitssollwerts (Vmod) in Abhängigkeit von dem Niederdrücken (%P) des Gaspedals und dem bestimmten Maximalgeschwindigkeitsprofil (C4) und ein Modul (32) zur Bestimmung eines Profils (C7) eines gefilterten Geschwindigkeitssollwerts (VF) in Abhängigkeit von dem zuvor berechneten modulierten rohen Geschwindigkeitssollwert (Vmod).

6. Parkhilfeverfahren für ein Kraftfahrzeug, welches das Parken des Fahrzeugs von einer Fahrbahn aus in eine freie Parklücke und das Herausfahren aus dem Parkplatz zurück auf die Fahrbahn gestattet, wobei das Kraftfahrzeug ein Hindernisdetektionssystem, ein Parkplatzdetektionssystem, eine elektrische Servolenkung mit ansteuerbarem Lenkwinkel, einen Motor und ein Bremssystem, die zusammen angesteuert werden können, ein Automatikgetriebe oder ein sogenanntes "Shift-by-Wire"-System, mindestens einen Wegaufnehmer, einen Beschleunigungsmesser, eine visuelle und akustische Schnittstelle, ein Mittel zur Aktivierung einer automatischen Ansteuerungsfunktion und ein Gaspedal (P) beinhaltet, wobei bei dem Verfahren die Manövergeschwindigkeit zu jedem Zeitpunkt des Manövers in Abhängigkeit von einem Wert einer Maximalgeschwindigkeit (Vmax), einer verbleibenden zurückzulegenden Entfernung (D), die durch ein System zur Wahrnehmung und Planung der Trajektorie berechnet wird, und dem Prozentsatz des Niederdrückens (%P) des Gaspedals (P) durch den Fahrer geregelt wird und verifiziert wird, ob die für das Starten des Parkmanövers erforderlichen Bedingungen erfüllt sind und der Fahrer das Manöver bestätigt, wobei die erforderlichen Bedingungen beinhalten, dass mindestens ein Parkplatz gefunden wurde, dass sich das Fahrzeug in der richtigen Position befindet, um das Parkmanöver durchzuführen, dass das Fahrzeug still steht und dass die Blinkleuchten betätigt sind.

7. Verfahren nach Anspruch 6, wobei die Aktivierung einer Phase des Suchens nach einem Parkplatz detektiert wird, die dazu fähig ist zu verifizieren, dass der Fahrer ein Steuerorgan (14) gedrückt hat, um die Parkplatzsuchfunktion zu aktivieren.

8. Verfahren nach Anspruch 6 oder 7, wobei, sobald das Verfahren für das Manöver bereit ist, der Motor von dem Gaspedal entkoppelt wird, sodass, sobald das Parkmanöver validiert wurde und für die gesamte Dauer des Parkmanövers, der Motor nicht mehr die durch das Gaspedal übermittelten Beschleunigungssollwerte, sondern nur noch die durch ein Geschwindigkeitsregelmodul gesendeten Beschleunigungssollwerte berücksichtigt.

9. Verfahren nach Anspruch 8, wobei nach der Entkopplung des Motors von dem Gaspedal das Niederdrücken des Gaspedals (P) verifiziert wird und ein Modul (22) zur Ausführung des Parkmanövers betätigt wird, welches das Fahrzeug in Bewegung setzt, wenn das Gaspedal (P) niedergedrückt wird, und die Geschwindigkeit durch ein Geschwindigkeitsregelmodul (24) regelt.

10. Verfahren nach Anspruch 9, wobei zur Regelung der Geschwindigkeit ein Profil (C4) einer zulässigen Maximalgeschwindigkeit (Vzul) während des Parkmanövers in Abhängigkeit von der verbleibenden zurückzulegenden Entfernung (D), die sich aus einem Entfernungsprofil (C1) ergibt, und einem Schwellenwert einer Maximalgeschwindigkeit (Vmax), der sich aus einem Profil (C2), das von einem System zur Wahrnehmung und Planung der Trajektorie bereitgestellt wird, ergibt, bestimmt wird, ein Geschwindigkeitskoeffizient in Abhängigkeit von dem Prozentsatz des Niederdrückens (%P) des Gaspedals, der sich aus einem Profil (C3) ergibt, berechnet und ein Satz von Profilen (C5) von Geschwindigkeitssollwerten (Vsoll) erzeugt wird, ein Profil (C6) eines modulierten rohen Geschwindigkeitssollwerts (Vmod) in Abhängigkeit von dem Niederdrücken (%P) des Gaspedals und dem bestimmten Maximalgeschwindigkeitsprofil (C4) bestimmt wird und ein Profil (C7) eines gefilterten Geschwindigkeitssollwerts (VF) in Abhängigkeit von dem zuvor berechneten modulierten rohen Geschwindigkeitssollwert (Vmod) bestimmt wird.

## Claims

1. Parking assistance system for a motor vehicle allowing the vehicle to be parked from a traffic lane into an available parking space and allowing it to leave said parking space to move onto the traffic lane, said motor vehicle comprising an obstacle detection system, a parking space detection system, steering angle-controllable electric power steering, a torque-controllable engine and braking system, an automatic transmission or what is known as a "shift-by-wire" system, at least one odometric sensor, an accelerometer, a means for activating an automatic control function and an accelerator pedal (P), **characterized in that** the parking assistance system comprises a speed regulation module (24) that computes, at all times of the manoeuvre, a speed setpoint on the basis of a maximum speed value (Vmax), of a remaining distance (D) to be covered as computed by a trajectory perception and planning system and of the percentage (%P) by which the accelerator pedal (P) is pressed down by the driver, and **in that** the parking assistance system comprises a module (16) for verifying the necessary conditions for starting the parking manoeuvre and for the driver to confirm the manoeuvre, the necessary conditions comprising:
at least one parking space is found, the vehicle is in the correct position to carry out the parking manoeuvre, the vehicle is stationary and the indicator lights are actuated.

2. System according to Claim 1, comprising a module (12) for detecting the activation of a parking space search phase, the module being able to verify that the driver has pressed a control member (14) in order to activate the parking space search function.

3. System according to Claim 2, comprising a module (18) for decoupling the engine and the accelerator pedal, such that, once the parking manoeuvre has been validated and when the conditions for starting the parking manoeuvre are met, and throughout the entire duration of the parking manoeuvre, the engine no longer takes into account the acceleration setpoints transmitted by the accelerator pedal, but only the acceleration setpoints sent by the speed regulation module (24).

4. System according to Claim 3, comprising a module (20) for verifying that the accelerator pedal (P) is pressed down and a module (22) for carrying out the parking manoeuvre, which sets the vehicle in motion when the accelerator pedal (P) is pressed down and regulates the speed by way of the speed regulation module (24).

5. System according to Claim 4, wherein the speed regulation module (24) comprises a module (26) for determining a maximum permissible speed (Vadm) profile (C4) during the parking manoeuvre on the basis of the remaining distance (D) to be covered as given by a distance profile (C1) and a maximum speed threshold value (Vmax) as given by a profile (C2), which are provided by a trajectory perception and planning system, a module (28) for computing a speed ratio on the basis of the percentage (%P) by which the accelerator pedal is pressed down as given by a profile (C3), and for generating a set of speed setpoint (Vcons) profiles (C5), a module (30) for determining a modulated raw speed setpoint (Vmod) profile (C6) on the basis of the pressing down (P%) of the accelerator pedal and of the determined maximum speed profile (C4) and a module (32) for determining a filtered speed setpoint (VF) profile (C7) on the basis of the previously computed modulated raw speed setpoint (Vmod).

6. Parking assistance method for a motor vehicle allowing the vehicle to be parked from a traffic lane into an available parking space and allowing it to leave said parking space to move onto the traffic lane, said motor vehicle comprising an obstacle detection system, a parking space detection system, steering angle-controllable electric power steering, a torque-controllable engine and braking system, an automatic transmission or what is known as a "shift-by-wire" system, at least one odometric sensor, an accelerometer, a visual and acoustic interface, a means for activating an automatic control function and an accelerator pedal (P), wherein the method comprises regulating the manoeuvre speed, at all times of the manoeuvre, on the basis of a maximum speed value (Vmax), of a remaining distance (D) to be covered as computed by a trajectory perception and planning system and of the percentage (%P) by which the accelerator pedal (P) is pressed down by the driver, and wherein the method comprises verifying that the necessary conditions for starting the parking manoeuvre are met and that the driver confirms the manoeuvre, the necessary conditions comprising at least one parking space is found, the vehicle is in the correct position to carry out the parking manoeuvre, the vehicle is stationary and the indicator lights are actuated.

7. Method according to Claim 6, comprising detecting the activation of a parking space search phase, able to verify that the driver has pressed a control member (14) in order to activate the parking space search function.

8. Method according to Claim 6 or 7, wherein, once the method is ready for the manoeuvre, the engine and the accelerator pedal are decoupled such that, once the parking manoeuvre has been validated and throughout the entire duration of the parking manoeuvre, the engine no longer takes into account the acceleration setpoints transmitted by the accelerator pedal, but only the acceleration setpoints sent by a speed regulation module.

9. Method according to Claim 8, wherein, after the engine and the accelerator pedal have been decoupled, it is verified that the accelerator pedal (P) is pressed down and a module (22) for carrying out the parking manoeuvre, which sets the vehicle in motion when the accelerator pedal (P) is pressed down and regulates the speed by way of a speed regulation module (24), is actuated.

10. Method according to Claim 9, wherein, in order to regulate the speed, a maximum permissible speed (Vadm) profile (C4) during the parking manoeuvre is determined on the basis of the remaining distance (D) to be covered as given by a distance profile (C1) and a maximum speed threshold value (Vmax) as given by a profile (C2), which are provided by a trajectory perception and planning system, a speed ratio is computed on the basis of the percentage (%P) by which the accelerator pedal is pressed down as given by a profile (C3), and a set of speed setpoint (Vcons) profiles (C5) is generated, a modulated raw speed setpoint (Vmod) profile (C6) is determined on the basis of the pressing down (P%) of the accelerator pedal and of the determined maximum speed profile (C4), and a filtered speed setpoint (VF) profile (C7) is determined on the basis of the previously computed modulated raw speed setpoint (Vmod).
